# DEMANDE DE BREVET EUROPEEN

(11) **EP 0 868 855 A1**
(43) Date de publication de la demande: **07.10.1998**
(21) Numéro de dépôt: 97200883.3
(22) Date de dépôt: 30.03.1997
(51) Int. Cl.: A23L 1/18, A23L 1/164, A23L 1/217

(54) **Amuse-gueule courbé**

(71) Demandeur: SOCIETE DES PRODUITS NESTLE S.A., 1800 Vevey (CH)
(72) Inventeur: Dupart, Pierre, 8405 Winterthur (CH); Geromini, Osvaldo, 1350 Orbe (CH); Desjardins, Jean-Jacques, 1026 Denges (CH)
(74) Mandataire: Wavre, Claude-Alain

(57) **Abrégé**

Procédé de courbage d'un amuse-gueule plat à base de farine ou semoule de féculent, dans lequel on pulvérise de l'eau ou une solution aqueuse de protéines coagulables sur un côté d'un amuse-gueule cuit-extrudé plat et l'on expose le côté ainsi traité de l'amuse-gueule à un rayonnement infrarouge.

## Description

La présente invention a pour objet un procédé de courbage d'un amuse-gueule plat a base de farine ou semoule de féculent.

US4247567 décrit un procédé de fabrication d'amuse-gueules a base de riz, connus au Japon sous le nom de "senbei", dans lequel on prépare une abaisse de pâte crue de riz, on la découpe en morceaux en forme de cercles, on les présèche, on les revêt sur l'une de leurs faces d'un assaisonnement liquide comprenant de l'eau salée, on les cuit à 180-300°C dans des conditions telles que le liquide ne puisse diffuser sur toute leur épaisseur, et l'on obtient ainsi des amuse-gueules courbés.

US4844919 décrit un procédé de fabrication d'amuse-gueules à base de féculent, dans lequel on découpe des morceaux d'abaisse d'une pâte crue de féculent, on applique sur l'une de leurs faces une composition sèche a base d'amidon capable d'absorber de l'eau, de gélatiniser et de former un film lors d'une cuisson subséquente au four, on les cuit au four et l'on obtient ainsi des amuse-gueules courbés.

US4283425 décrit un procédé de fabrication de pommes de terre frites sans friture, dans lequel on découpe les pommes de terre crues en morceaux, on enrobe les morceaux avec une solution de protéines, on les chauffe aux microondes et l'on obtient ainsi sans friture des pommes de terre recouvertes d'un film translucide qui leur donne un aspect de pommes de terre frites traditionnelles.

La présente invention a pour but de proposer un procédé de courbage d'un amuse-gueule plat à base de farine ou semoule de féculent obtenu par cuisson-extrusion.

A cet effet, dans le procédé de courbage d'un amuse-gueule plat à base de farine ou semoule de féculent selon la présente invention, on pulvérise de l'eau ou une solution aqueuse de protéines coagulables sur un côté d'un amuse-gueule cuit-extrudé plat et l'on expose le côté ainsi traité de l'amuse-gueule à un rayonnement infrarouge.

On a constaté avec surprise que l'on peut obtenir ainsi de manière simple, sûre et reproductible des amuse-gueules présentant une courbure marquée à partir d'amuse-gueules cuits-extrudés plats.

Pour mettre en oeuvre le procédé selon la présente invention, on peut obtenir l'amuse-gueule plat en préparant un mélange comprenant au moins une farine ou semoule de féculent et, le cas échéant, une quantité d'eau ajoutée telle qu'il présente une teneur en eau de 5-18%, et en cuisant-extrudant le mélange, l'extrusion étant réalisée au travers d'une filière présentant au moins un orifice de sortie oblong débouchant dans l'atmosphère ambiante.

On peut choisir le féculent parmi les céréales telles que l'avoine, le blé, l'orge, le seigle ou le maïs, parmi les tubercules ou racines telles que la pomme de terre, le manioc ou l'igname, et/ou parmi les légumineuses telles que le pois ou le haricot, par exemple.

On peut prévoir d'incorporer au mélange un son de céréales, notamment de blé ou d'avoine, et/ou des fibres de betterave ou de légumineuses, par exemple. Dans une forme de réalisation particulière, on incorpore au mélange un son d'avoine dégraissé concentré présentant une teneur en fibres d'au moins 30% en poids et une teneur en beta-glucane d'au moins 14% en poids.

De préférence, on prépare un mélange comprenant, en parties en poids, 40-98 parties de farine ou semoule de féculent, jusqu'à 50 parties de son de céréales, jusqu'à 3 parties de chlorure de sodium et jusqu'à 6 parties de saccharose.

De préférence, on prépare un mélange présentant une teneur en matière grasse de 8-15%, en % sur matière sèche, cette matière grasse étant apportée au moins en partie par ladite farine ou semoule de féculent, une autre partie pouvant être ajoutée au mélange sous forme d'huile ou graisse comestible telle que l'huile de palme hydrogénée, par exemple.

On peut également incorporer au mélange un agent aromatisant et/ou un agent renforçateur d'arôme tel que des épices, de l'acide citrique et/ou du glutamate de sodium, par exemple.

On peut cuire-extruder le mélange sous une pression de 6-16 MPa à une température de 100-220°C, de préférence 120-180°C durant 20-60 s, dans une extrudeuse bivis, par exemple. On peut ajuster la vitesse de rotation des vis de l'extrudeuse à 100-400 tours par min (rpm), de préférence 150-200 rpm, par exemple.

De préférence, on réalise l'extrusion au travers d'une filière présentant au moins un orifice de sortie en forme de fente de 0,7-3 mm de largeur et de 2-10 cm de longueur. Une telle filière peut être réalisée sous forme d'une plaque d'acier percée d'un canal dont l'orifice de sortie, autrement dit l'ouverture apparente au niveau de la surface extérieure de la plaque, qui débouche dans l'espace ambiant, présente une telle forme.

De préférence, on extrude la bande dans des conditions telles qu'elle présente un coefficient d'expansion de 2 à 6, c'est-à-dire que, du fait de l'expansion de la bande extrudée, son épaisseur augmente de 2 à 6 fois par rapport à la largeur correspondante de l'orifice de sortie de la filière.

Dans une forme particulière de réalisation de l'amuse-gueule plat, on peut laminer la bande sous l'effet d'au mois un rouleau exerçant sur elle une pression telle que son épaisseur soit notablement réduite, de manière que la texture du produit final puisse être comparable à la texture d'un tortilla, d'un chips ou d'un cracker préparé de manière traditionnelle, par exemple. On peut obtenir cet effet en laminant la bande expansée sous un rouleau ou entre un ou plusieurs jeux de deux rouleaux exerçant sur elle une pression de 10-50 kPa de manière à réduire son épaisseur d'un facteur 2 à 6, la largeur de la bande n'augmentant pratiquement pas au cours de ce laminage, par exemple. La température des rouleaux au cours du laminage peut être contrôlée et maintenue à 10-40°C, par exemple.

Enfin, on peut découper la bande laminée par estampage en morceaux présentant diverses formes telles que triangulaire, circulaire ou ovale, par exemple.

L'amuse-gueule plat ainsi obtenu peut présenter une teneur en eau de environ 3-15%, par exemple.

Cependant, dans une forme de réalisation préférée du présent procédé, l'amuse-gueule cuit-extrudé plat présente une teneur en eau de 7-10%. En effet, on a constaté que l'on peut obtenir une courbure particulièrement remarquable à partir d'une teneur en eau de 7% et qu'au-delà d'une teneur en eau de 10% on risque de rencontrer des problèmes lors d'un postséchage éventuel.

On pulvérise donc une solution aqueuse de protéines coagulables sur un côté de l'amuse-gueule cuit-extrudé plat et l'on expose le côté ainsi traité de l'amuse-gueule à un rayonnement infrarouge.

La surface du côté traité de l'amuse-gueule peut être ainsi portée à une température de 100-250°C durant une exposition au rayonnement infrarouge de 10-45 s, par exemple.

On peut pulvériser sur un côté de l'amuse-gueule 0,5-10%, de préférence 1-5%, en poids de l'amuse-gueule, d'une solution aqueuse à 2-15%, de préférence 5-12% de protéines coagulables, par exemple.

Les protéines coagulables peuvent être des protéines de lactosérum ou des protéines d'oeuf, par exemple.

L'amuse-gueule peut présenter une teneur en eau résiduelle de 2-4% après courbage et après un éventuel postséchage, par exemple. On peut réaliser un tel post-séchage à l'air chaud à 140-160°C en lit fluidisé ou au four durant quelques min, par exemple.

Les exemples ci-après présentent à titre d'illustration quelques modes de réalisation du procédé de préparation d'un amuse-bouche selon la présente invention. Les pourcentages et parties y sont donnés en poids.

### Exemple 1

Pour préparer un mélange à extruder, on déverse les différents ingrédients de la composition pulvérulente suivante, avec de l'huile et de l'eau, dans la trémie d'alimentation d'une extrudeuse CLEXTRAL de type BC 72, à raison de 140 kg de composition pulvérulente par h:
- semoule de maïs jaune: 60%
- farine de légumineuse: 14%
- chlorure de sodium: 1,5%
- épices: 2,5%
- saccharose: 4%
- huile de palme: 10%
- eau: 8%

Le mélange ainsi formé dans l'extrudeuse présente une teneur en eau de 18%.

On cuit-extrude ce mélange en portant sa température dans l'extrudeuse à 162°C sous une pression de 12,7 MPa, les vis tournant à 106 rpm.

On réalise l'extrusion au travers d'une filière présentant un orifice de sortie en forme de fente de 1,2 mm de largeur et de 3,8 cm de longueur débouchant dans l'atmosphère ambiante.

La bande cuite-extrudée présente un taux d'expansion de 4,5. Sa teneur en eau est de 8,5%.

On découpe la bande laminée par estampage en morceaux plats de forme circulaire de 38 mm de diamètre.

On pulvérise sur un côté de l'amuse-gueule cuit-extrudé plat 7%, en poids de l'amuse-gueule, d'une solution aqueuse à 10% de protéines coagulables (protéines de lactosérum), et l'on expose le côté ainsi traité de l'amuse-gueule durant 17 s à un rayonnement infrarouge (puissance totale 27,2 kW) tel que la température de sa surface soit portée à environ 200°C.

Les amuse-gueules ainsi obtenus présentent une courbure que l'on peut caractériser en les posant à plat et en mesurant leur hauteur. On détermine ainsi qu'aucun des amuse-gueules courbés obtenus ne présente une hauteur inférieure à 0,5 cm, 88% d'entre eux présentent une hauteur comprise entre environ 0,5 et 1 cm, et les 12% restants présentent une hauteur supérieure à 1 cm.

### Exemple 2

On procède de la manière décrite à l'exemple 1, à l'exception du fait que l'on pulvérise sur un côté de l'amuse-gueule cuit-extrudé plat 7%, en poids de l'amuse-gueule, d'eau au lieu d'une solution aqueuse de protéines coagulables.

Les amuses-gueules ainsi obtenus présentent une courbure que l'on peut caractériser comme décrit à l'exemple 1. On détermine ainsi que 15% des amuse-gueules courbés obtenus présentent une hauteur inférieure à 0,5 cm, 80% d'entre eux présentent une hauteur comprise entre environ 0,5 et 1 cm, et les 5% restants présentent une hauteur supérieure à 1 cm.

### Exemple 3

Pour préparer un mélange à extruder, on déverse les différents ingrédients de la composition pulvérulente suivante dans la trémie d'alimentation d'une extrudeuse CLEXTRAL de type BC 45, à raison de 65 kg de composition pulvérulente par h:
- farine de maïs jaune dégermée: 47 parties
- son d'avoine dégraissé concentré: 48,5 parties
- farine d'orge: 2,6 parties
- fructose/lévulose: 1,4 parties
- chlorure de sodium: 0,3 parties
- sodium biphosphate anhydre: 0,5 parties
- tocophérol: 0,025 parties

A cette composition pulvérulente, on ajoute 9,5 kg d'eau par h. Le mélange ainsi formé dans l'extrudeuse présente une teneur en eau de 18%.

On cuit-extrude ce mélange en portant sa température dans l'extrudeuse à 172°C sous une pression de 10,2 MPa, les vis tournant à 200 rpm.

On réalise l'extrusion au travers d'une filière présentant un orifice de sortie en forme de fente de 1,2 mm de largeur et 4 cm de longueur débouchant dans l'atmosphère ambiante.

La bande cuite-extrudée présente une épaisseur de 4 mm et une teneur en eau de 8,6%.

On lamine la bande entre deux fois deux rouleaux successifs dont la température de surface est maintenue à 30°C et qui exercent sur elle une pression de 30 kPa. On réduit ainsi son épaisseur à 1,9 mm.

On découpe la bande laminée par estampage en morceaux de forme circulaire de 40 mm de diamètre.

On pulvérise sur un côté de l'amuse-gueule cuit-extrudé plat 8% d'eau, en poids de l'amuse-gueule, et l'on expose le côté ainsi traité de l'amuse-gueule durant 20 s à un rayonnement infrarouge tel que la température de sa surface soit portée à environ 200°C.

Les amuse-gueules ainsi obtenus présentent une courbure appréciable bien qu'un peu moins marquée que la courbure présentée par les amuse-gueules courbés obtenus aux exemples 1 et 2.

## Revendications

1. Procédé de courbage d'un amuse-gueule plat à base de farine ou semoule de féculent, dans lequel on pulvérise de l'eau ou une solution aqueuse de protéines coagulables sur un côté d'un amuse-gueule cuit-extrudé plat et l'on expose le côté ainsi traité de l'amuse-gueule à un rayonnement infrarouge.

2. Procédé selon la revendication 1, dans lequel l'amuse-gueule plat est obtenu en préparant un mélange comprenant au moins une farine ou semoule de féculent et, le cas échéant, une quantité d'eau ajoutée telle qu'il présente une teneur en eau de 5-18%, et en cuisant-extrudant le mélange, l'extrusion étant réalisée au travers d'une filière présentant au moins un orifice oblong débouchant dans l'atmosphère ambiante.

3. Procédé selon la revendication 1, dans lequel l'amuse-gueule plat est obtenu par cuisson-extrusion, sous une pression de 6-16 MPa à une température de 100-220°C durant 20-60 s, dans une extrudeuse bivis, d'un mélange comprenant, en parties en poids, 40-98 parties de farine ou semoule de féculent, jusqu'à 50% de son de céréales, jusqu'à 3 parties de chlorure de sodium et jusqu'à 6 parties de saccharose, l'extrusion étant réalisée au travers d'une filière présentant au moins un orifice de sortie en forme de fente de 0,7-3 mm de largeur et 2-10 cm de longueur débouchant dans l'atmosphère ambiante.

4. Procédé selon la revendication 1, dans lequel l'amuse-gueule cuit-extrudé plat présente une teneur en eau de 3-15% et un coefficient d'expansion de 2-6%.

5. Procédé selon la revendication 1, dans lequel la surface du côté traité de l'amuse-gueule est portée à une température de 100-250°C durant une exposition au rayonnement infrarouge de 10-45 s.

6. Procédé selon la revendication 1, dans lequel on pulvérise sur un côté de l'amuse-gueule 0,5-10%, en poids de l'amuse-gueule, d'une solution aqueuse à 2-15% de protéines coagulables.

7. Procédé selon la revendication 6, dans lequel les protéines coagulables sont des protéines de lactosérum ou des protéines d'oeuf.

8. Procédé selon la revendication 5, dans lequel l'amuse-gueule présente une teneur en eau résiduelle de 2-4% après courbage et après un éventuel postséchage.
